# EUROPÄISCHE PATENTSCHRIFT

(11) **EP 0 611 681 B1**
(45) Veröffentlichungstag und Bekanntmachung des Hinweises auf die Patenterteilung: **07.02.1996**
(21) Anmeldenummer: 93120306.1
(22) Anmeldetag: 16.12.1993
(51) Int. Cl.: B60Q 9/00, B60R 16/02

(54) **Anzeigeeinrichtung für den Aktivierungszustand des Mehrachsantriebs und der Differentialsperren eines Kraftfahrzeugs**
Indicating device for the activation status of the multi-axle drive and the differential locks of a vehicle
Dispositif destiné à indiquer l'état d'activation de la propulsion à axes multiples et des blocages de différentiel d'un véhicule

(30) Priorität: 16.02.1993 AT 279/93
(43) Veröffentlichungstag der Anmeldung: 24.08.1994
(73) Patentinhaber: STEYR NUTZFAHRZEUGE AG, A-4400 Steyr (AT)
(72) Erfinder: Wittberger, Gerhard, A-4421 Aschach/Steyr (AT)

(56) Entgegenhaltungen:
- US-A- 4 745 390
- PATENT ABSTRACTS OF JAPAN, unexamined applications, Sektion M, Band 10, Nr. 353, 28. November 1986 THE PATENT OFFICE JAPANESE GOVERNMENT Seite 50 M 539; & JP-A-61-150 848 (HITACHI)

## Beschreibung

Die Erfindung betrifft ein Kraftfahrzeug, insbesondere Nutzfahrzeug, mit Einzelheiten entsprechend dem Oberbegriff des Anspruches 1.

In der Broschüre _{"}Werkstattpraxis-Pkw Allradantriebe, 1. Aufl. 1990, Krafthand Verlag Walter Schulz GmbH Bad Wörishofen" (s. Seiten 69-91, 147, 203-205, 291-294) sind verschiedene Serien-Allradfahrzeuge beschrieben. Dabei weisen diese Allradfahrzeuge auch Anzeigen auf, die die Räder und den Antriebsstrang darstellen und die punktuell anzeigen können, ob ein Differential gesperrt ist oder nicht.

Die Erfindung bezieht sich jedoch nicht auf Fahrzeuge mit permanentem Allradantrieb, sondern Fahrzeuge, bei denen in der Regel nur eine Achse, z.B. die Hinterachse, permanent angetrieben und eine oder mehrere Achsen antriebsmäßig zuschaltbar ist / sind. Bei solchen Fahrzeugen tritt, so zeigt die Praxis, das Problem auf, daß die Betätigungselemente für die Zuschaltung der weiteren Achse(n) und für die Sperrung der Differentiale im Arbeitsbereich des Fahrers meist schlecht plaziert und außerdem vielfach mit einer verwirrenden Symbolik versehen sind, die keine eindeutige, zumindest keine schnelle Auslösung der gewünschten Zuschalt- bzw. Sperrfunktion ermöglichen. Auch wenn für diese Funktionen zum Nachweis ihrer Auslösung optische Anzeigen im Fahrzeug vorgesehen sind, so geben diese oft auch keine klare Auskunft über die tatsächlich gegebenen Antriebs- und Sperrzustände.

Es ist daher Aufgabe der Erfindung, in einem Kraftfahrzeug der eingangs definierten Art ergonomisch günstige Vorkehrungen zu schaffen, die sicher und schnell die richtige Wahl der antriebsmäßig gewünschten Achszuschaltung und Differentialsperrung ermöglichen sowie jede durchgeführte Schaltmaßnahme in eindeutiger und unmißverständlicher Weise für den Fahrer erkennbar machen.

Diese Aufgabe ist bei einem Kraftfahrzeug der gattungsgemäßen Art erfindungsgemäß durch die im Kennzeichen des Anspruches 1 angegebene Lehre gelöst.

Vorteilhafte Einzelheiten und Ausgestaltungen dieser Lösung sind in den Unteransprüchen angegeben.

Das Prinzip der Erfindung besteht dabei darin, dem Betätigungselement bzw. den Betätigungselementen ein die angetriebenen Räder und die zusätzlich anzutreibenden Räder sowie den Antriebsstrang des Kraftfahrzeuges durch LED- oder LCD-Segmente symbolisch nachbildendes Anzeigedisplay zuzuordnen und in diesem die LED- bzw. LCD-Segmente so auszubilden und anzuordnen, daß
a) angetriebene Räder und ausgelöste Differentialsperren dickbalkig,
b) nicht angetriebene Räder und nicht ausgelöste Differentialsperren dagegen nur dünnstrichig
angezeigt werden.

Aufgrund dieser erfindungsgemäßen Maßnahme ist es dem Fahrer jederzeit sicher und schnell möglich, den gewünschten Antriebs- bzw. Differentialsperrzustand herbeizuführen, außerdem bekommt er optisch sofort in eindeutiger und unmißverständlicher Weise durch eine entsprechend klare Symbolik den herbeigeführten Antriebs- bzw. Sperrzustand angezeigt.

Nachstehend ist die erfindungsgemäße Lösung anhand zweier in der Zeichnung dargestellter Ausführungsbeispiele näher erläutert. In der Zeichnung zeigen:
- Fig. 1: eine Ausführungsform des Betätigungselementes gemäß dem ersten erfindungsgemäßen Prinzip in nicht betätigter Stellung,
- Fig. 1A: das Betätigungsorgan gemäß Fig. 1 nach einer ersten, die Zuschaltung der Vorderachse auslösenden Betätigung,
- Fig. 1B: das Betätigungsorgan gemäß Fig. 1 nach einer zweiten, die zusätzliche Sperrung des Hinterachsdifferentiales auslösenden Betätigung,
- Fig. 1C: das Betätigungsorgan gemäß Fig. 1 nach einer dritten, die zusätzliche Sperrung des Vorderachsdifferentiales auslösenden Betätigung,
- Fig. 2: eine Ausführungs- und Anordnungsform der drei Betätigungsorgane und des Anzeigedisplays der zweiten erfindungsgemäßen Lösung,
- Fig. 2A: die Auswirkungen einer Betätigung des ersten, ganz links dargestellten, die Zuschaltung des Vorderachsantriebes auslösenden Betätigungselementes auf dem Anzeigedisplay,
- Fig. 2B: die Auswirkungen einer Betätigung des zweiten, in der Mitte dargestellten, die zusätzliche Sperrung des Hinterachsdifferentiales auslösenden Betätigungselementes auf dem Anzeigedisplay, und
- Fig. 2C: die Auswirkungen einer Betätigung des dritten, ganz rechts dargestellten, die zusätzliche Sperrung des Vorderachsdifferentiales auslösenden Betätigungselementes auf dem Anzeigedisplay.

Bezugsgrundlage der in der Zeichnung dargestellten Ausführungsbeispiele ist jeweils ein Kraftfahrzeug mit einem Antriebsstrang mit permanent angetriebener Hinterachse und antriebsmäßig zuschaltbarer Vorderachse sowie zusätzlich sperrbarem Hinterachsdifferential und zusätzlich sperrbarem Vorderachsdifferential. Dies ist der Anwendung der Erfindungen nach der einfachste Fall. Die Erfindungen sind jedoch auch bei Fahrzeugen, insbesondere Nutzfahrzeugen anwendbar, die mehr als eine permanent angetriebene Achse, beispielsweise zwei oder drei permanent angetriebene Hinterachsen, und wenigstens eine antriebsmäßig zuschaltbare Achse, z.B. eine oder zwei zuschaltbare Vorderachse(n) und eine oder mehrere zuschaltbare Hinterachse(n) aufweisen, welche angetriebenen bzw. zuschaltbaren Achsen alle oder teilweise zusätzlich durch Differentiale sperrbar sind.

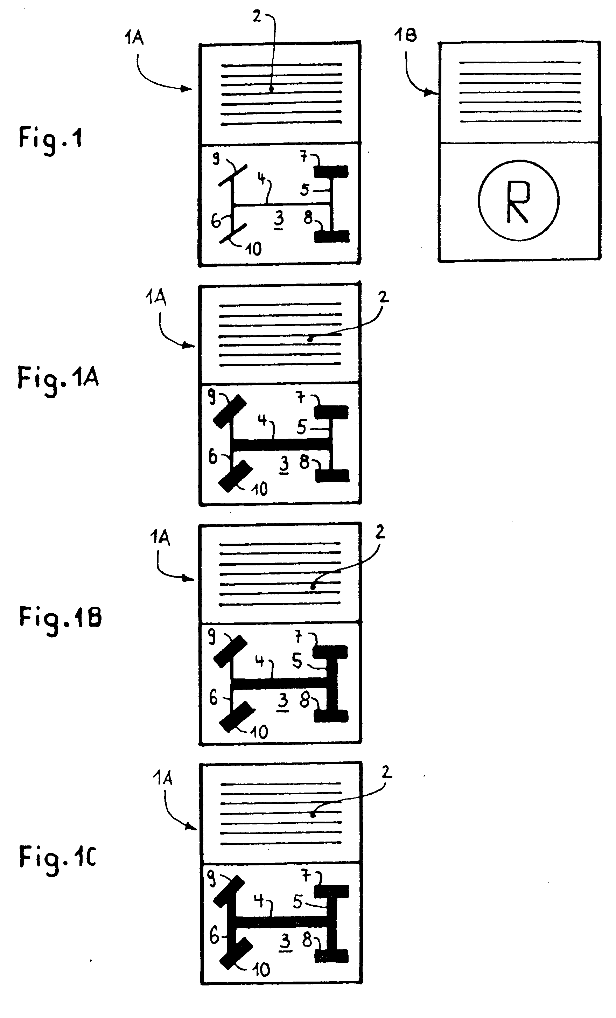

Die erste erfindungsgemäße Lösung -wie beispielhaft anhand von Fig. 1 gezeigteignet sich im Prinzip besonders für Anwendung bei Kraftfahrzeugen, bei denen im Antriebsstrang einer einzigen permanent angetriebenen Achse nur eine weitere Achse antriebsmäßig zuschaltbar und beide Achse(n) zusätzlich durch Differentiale sperrbar, daher die Betätigungen des Fahrers, um diese Antriebs- und Sperrzustände herbeizuführen, anzahlmäßig überschaubar sind. In diesem Fall genügt das Vorsehen eines Betätigungselementes 1A für die Auslösung der antriebsmäßigen Achszuschaltung und der Differentialsperrungen sowie eines dem Betätigungselement 1A benachbart angeordneten Rücknahmeschalters 1B,durch dessen jeweilige Betätigung eine durch Betätigung des Betätigungselementes 1A ausgelöste Zuschalt- oder Sperrmaßnahme innerhalb der gegebenen Reihenfolge um jeweils einen Schritt zurücknehmbar, d.h., der in der Schaltreihenfolge nächstniedrigere Sperrzustand oder Antriebszustand herbeigeführt wird.

Das Betätigungselement 1A besteht aus einem Tastschalter 2 mit einem die angetriebenen und zusätzlich antreibbaren Räder sowie den Antriebsstrang des Fahrzeugs durch LED- oder LCD-Segmente symbolisierenden Anzeigefeld 3. Unter LED ist light emitting diode und unter LCD liquid crystal display, wie an sich bekannt, zu verstehen. In diesem Anzeigefeld 3 des Betätigungselementes 1 ist die Fahrzeugsymbolik vorzugsweise wie folgt gegeben: Der Achsantriebsstrang ist durch ein langes, dickbalkig oder dünnstrichig aktivierbares Balkensegment 4 und jeweils endseitig desselben gegebene kürzere, die durch Differential sperrbare Hinter- und Vorderachse stilisierende, ebenfalls dickbalkig oder dünnstrichig aktivierbare Balkensegmente 5, 6 symbolisiert. An dem die Hinterachse stilisierenden Balkensegment 5 schließen sich endseitig jeweils kurze, immer dickbalkig aktivierte Balkensegmente 7, 8 an, die die immer angetriebenen Hinterräder symbolisieren. An dem die Vorderachse stilisierenden Balkensegment 6 schließen sich endseitig jeweils schräg stehende, die lenkbaren Vorderräder symbolisierende` ebenfalls dickbalkig oder dünnstrichig aktivierbare Balkensegmente 9, 10 an. Demzufolge ist der Normalantrieb des Kraftfahrzeugs über die angetriebene Hinterachse immer durch permanent dickbalkig und in einer bestimmten Farbe, z.B. grün aktivierte Anzeigesegmente, die die Hinterräder stilisieren, optisch hervorgehoben, während die nicht aktivierten Antriebs- bzw. Sperrzustände durch dünnstrichig und gegebenenfalls andersfarbig, z.B. weiß oder gelb aktivierte Anzeigesegmente angezeigt werden.

Durch eine erstmalige Betätigung des Tastschalters 2 (siehe Fig. 1A) wird die Zuschaltung der Vorderachse, durch eine nochmalige Betätigung des Tastschalters 2 (siehe Fig. 1B) eine zusätzliche Sperrung des Hinterachsdifferentiales und durch eine weitere Betätigung des Tastschalters 2 (siehe Fig. 1C) eine zusätzliche Sperrung auch des Vorderachsdifferentiales ausgelöst, über in der Zeichnung nicht dargestellte fahrzeuginterne Steuerungsorgane. Dabei wird im Anzeigefeld 3 des Betätigungselementes 1 die ausgelöste Vorderachs-Zuschaltung durch zusätzlich dickbalkig und in gleicher Farbe, z.B. grün aktivierte Anzeigesegmente optisch hervorgehoben, nicht bzw. noch nicht aktivierte Antriebs- bzw. Sperrzustände bleiben dagegen wie vorher durch nur dünnstrichige Anzeigesegmente angezeigt. Dies bedeutet, daß im Fall einer einmaligen Betätigung des Tastschalters 2 die dadurch hervorgerufene Zuschaltung des Vorderachsantriebes im Anzeigefeld 3 durch die zusätzliche dickbalkige und farblich hervorgehobene Aktivierung der Balkensegmente 4, 9 und 10 optisch bestätigt wird und dem Fahrer die dann wirksamen Antriebszustände auf dem Anzeigefeld durch die dickbalkig und zum Beispiel grün aktivierten Balkensegmente 4, 7, 8, 9 und 10 signalisiert sind - siehe Fig. 1A. Bei einer nochmaligen Betätigung des Tastschalters 2 wird die hierdurch ausgelöste zusätzliche Sperrung des Hinterachsdifferentiales im Anzeigefeld 3 durch das gegenüber dem bisherigen Zustand zusätzlich dickbalkig und farblich stark unterschiedlich, z.B. rot aktivierte Balkensegment 5 bestätigt, so daß dem Fahrer - wie aus Fig. 1B ersichtlich - die dann wirksamen Antriebs- und Sperrzustände im Anzeigefeld 3 durch die dickbalkig teils zum Beispiel grün, teils zum Beispiel rot aktivierten Balkensegmente 4, 5, 7, 8, 9 und 10 signalisiert sind. Durch eine nochmalige, dritte Betätigung des Tastschalters 2 wird die hierdurch ausgelöste zusätzliche Sperrung des Vorderachsdifferentiales im Anzeigefeld 3 durch das gegenüber dem bisherigen Zustand zusätzlich dickbalkig und in der gleichen Farbe wie für die andere Differentialsperrung, z.B. rot aktivierte Balkensegment 6 bestätigt, so daß dem Fahrer die Aktivierung des gesamten Antriebsstranges und aller möglichen Differentialsperren auf dem Anzeigenfeld durch insgesamtdickbalkige Aktivierung aller Balkensegmente 4 bis 10 signalisiert ist.

Durch die farblich unterschiedliche Hervorhebung der die Antriebszustände und der die Differential-Sperrzustände dickbalkig aufzeigenden Segmente ist dem Fahrer somit eine optisch eindeutige Erkennung und Unterscheidung derselben möglich.

Durch jedes Betätigen des Rücknahmeschalters 1B wird der jeweils in der Schaltreihenfolge davor gegebene Zustand wieder aufgelöst, d.h., die Vorderachszuschaltung wird aufgehoben, falls nur diese initiiert war, oder es wird die Hinterachsdifferentialsperrung aufgehoben, falls diese zusätzlich zum Vorderachsantrieb aktiviert war, oder es wird die Vorderachsdifferentialsperrung aufgehoben, falls diese zusätzlich zum Vorderachsantrieb und der Hinterachsdifferentialsperrung aktiviert war. Im Anzeigefeld 3 wird die jeweilige Maßnahme durch Rücknahme der dickbalkigen Aktivierung der betreffenden Balkensegmente und Rückkehr derselben in dünnstrichig aktivierten Zustand dem Fahrer optisch bestätigt.

Das Betätigungselement 1A und der Rücknahmeschalter 1B sind im Blickfeld des Fahrers und in manuell gut erreichbarem Abstand von dessen normaler Sitzposition beispielsweise im Bereich um das Lenkrad, am Armaturenbrett, einer Konsole oder dergleichen angeordnet.

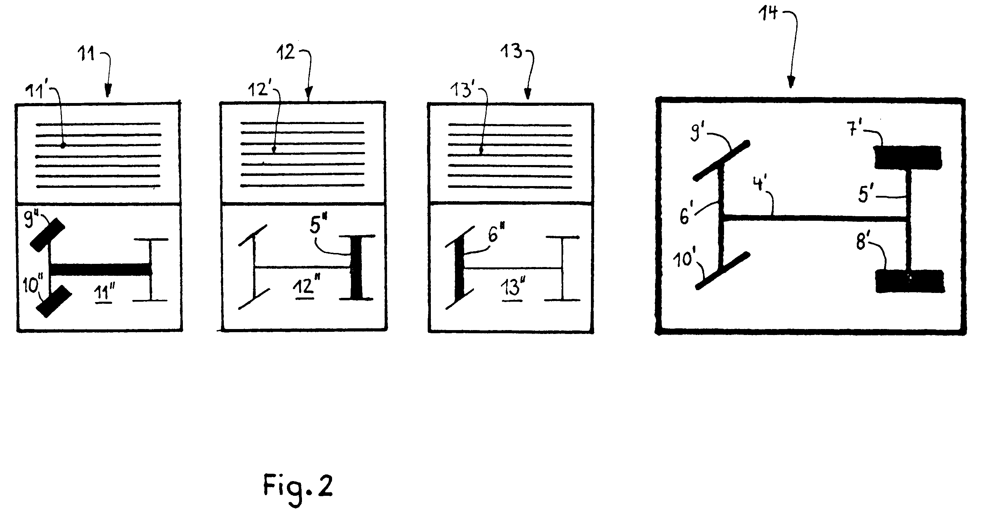

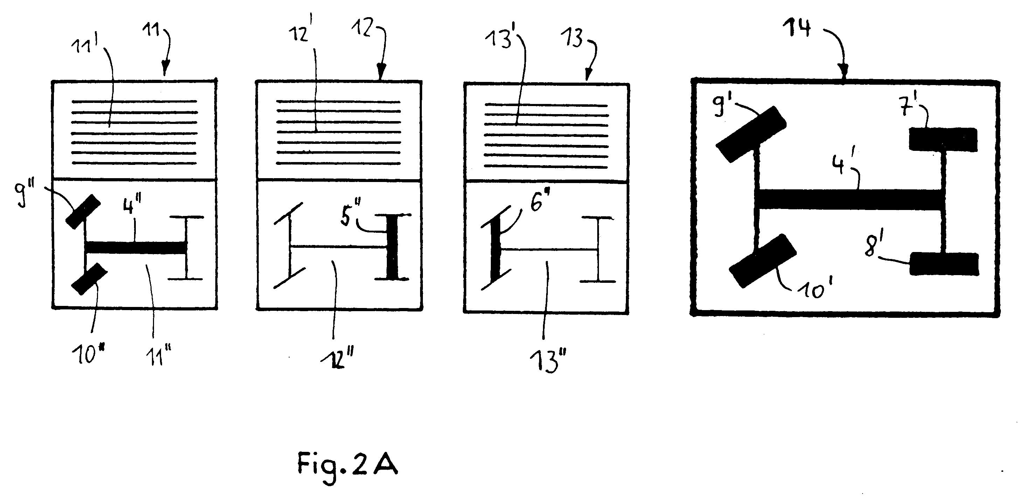

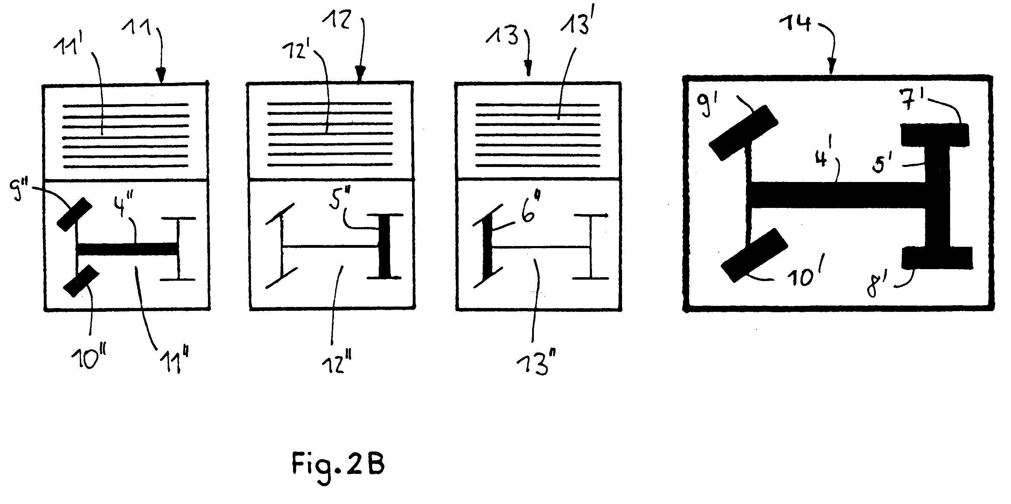

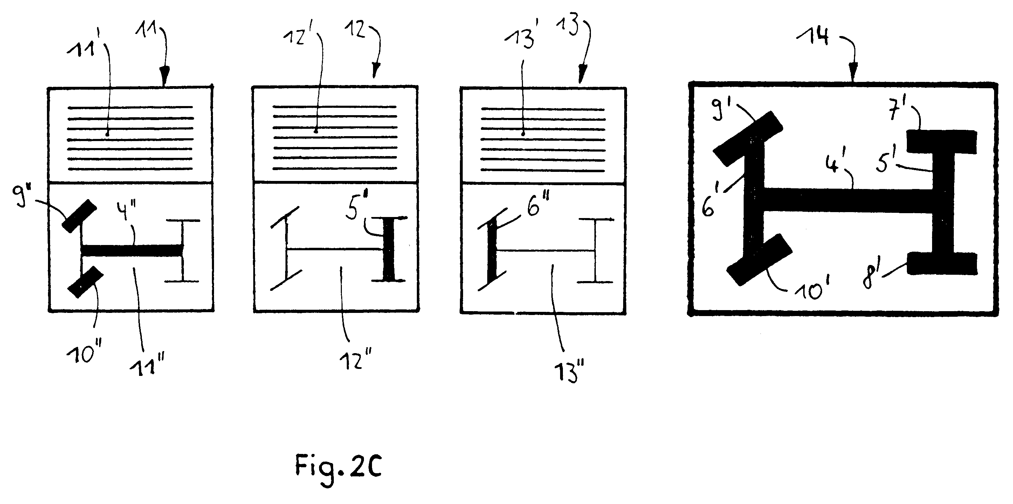

Die zweite erfindungsgemäße Lösung ist generell bei Kraftfahrzeugen verwendbar, unabhängig davon, wie viele Achszuschaltungen und Differentialsperrungen möglich sind. Außerdem ist das zweite Erfindungsprinzip aus ergonomischer Sicht günstiger als das erste. Deswegen, weil für die Auslösung jeder Achszuschaltung und einer Differentialsperrung ein eigenes Betätigungselement, aber nur ein Anzeigedisplay vorgesehen ist, aus dem die ausgelösten Zuschalt- und Sperrmaßnahmen in optisch eindeutig unterscheidender Symbolik aufgezeigt werden. Der Einfachheit der Darstellung und des Verständnisses wegen ist dem diesbezüglichen Ausführungsbeispiel - siehe Fig. 2 - ebenfalls wie im Fall gemäß Fig. 1 ein Kraftfahrzeug zugrundegelegt, das eine permanent angetriebene Hinterachse und eine antriebsmäßig zuschaltbare Vorderachse aufweist und dessen beide Antriebsachsen durch Differentiale zusätzlich sperrbar sind. In Fig. 2 ist das Betätigungselement für die Auslösung der Vorderachszuschaltung mit 11, jenes für die Hinterachsdifferentialsperrung mit 12 und jenes für die Vorderachsdifferentialsperrung mit 13 bezeichnet. Das zugehörige Anzeigedisplay ist mit 14 bezeichnet. Das Anzeigedisplay 14 ist im Blickfeld des Fahrers, zum Beispiel am Armaturenbrett, angeordnet. Durch dieses Anzeigedisplay 14 sind die Räder und der Antriebsstrang des Fahrzeuges über LED- oder LCD-Segmente in prinzipiell gleicher Weise symbolisierbar wie im Anzeigefeld 3 des Betätigungselementes 1 der ersten erfindungsgemäßen Lösung gemäß Fig. 1. Es sind deshalb im Anzeigedisplay 14 für die dortigen Balkensegmente die gleichen, jedoch mit einem Beistrich versehenen Bezugszeichen verwendet und demzufolge mit 4', 5', 6,' 7', 8', 9', 10' bezeichnet. Die - im gewählten Ausführungsbeispiel drei - Betätigungselemente 11, 12, 13 sind ebenfalls im Blickfeld des Fahrers und im manuell erreichbaren Abstand um dessen normale Sitzposition beispielsweise im Bereich um das Lenkrad, am Armaturenbrett, einer Konsole oder dergleichen angeordnet. Jedes der im wesentlichen gleich ausgebildeten und in ergonomisch sinnvoller Reihenfolge angeordneten Betätigungselemente 11, 12, 13 besteht aus einem Tastschalter 11' bzw. 12' bzw. 13' mit einem die Räder und den Antriebsstrang des Fahrzeugs stilisierenden Symbol 11'', 12'', 13'', das vorzugsweise unterhalb des jeweiligen Tastenfeldes gegeben ist. Diese Symbolik entspricht prinzipiell jener des Anzeigedisplays 14. Dabei ist jedoch an jedem der Tastschalter 11', 12', 13' die jeweils durch seine Betätigung auszulösende Zuschalt- bzw. Sperrmaßnahme dickbalkig hervorgehoben, während die anderen Symbolteile dagegen nur dünnstrichig dargestellt sind. Das Betätigungselement 11 dient zur Auslösung der Zuschaltung des Vorderachsantriebes, demzufolge sind am dortigen Symbol der Vorderachsantriebsstrang 4'' und die beiden Vorderräder 9'', 10'' dickbalkig hervorgehoben. Das Betätigungselement 12 dagegen dient zur zusätzlichen Sperrung des Hinterachsdifferentiales, demzufolge ist am zugehörigen Symbol 12'' die sperrbare Hinterachse durch einen dicken Balken 5'' hervorgehoben. Das Betätigungselement 13 dient zur Auslösung der zusätzlichen Vorderachsdifferentialsperrung, was dem Fahrer auf dem zugehörigen Symbol 13'' durch eine mittels eines dicken Balkens 6'' stilisierte sperrbare Vorderachse angedeutet ist.

Die jeweiligen Symbole 11'', 12'', 13'' können auf dem jeweiligen Tastschalter 11', 12', 13' durch Aufkleber, Farbaufdruck, von innen her durchleuchtete, durchscheinende Striche oder entsprechend aktivierte LED- oder LCD-Anzeigesegmente gebildet sein. Außerdem ist es möglich, die jeweils schon dickbalkig hervorgehobenen Teile eines Symbols zusätzlich auch noch farblich unterschiedlich, beispielsweise rot, gegenüber den anderen andersfarbig, beispielsweise grün und dünnstrichig dargestellten Teilen hervorzuheben.

Im Anzeigedisplay 14 ist der Normalantrieb des Kraftfahrzeuges über die permanent angetriebene(n) Achse(n), hier der Hinterachse durch permanent dickbalkig und in einer bestimmten Farbe, z.B. grün aktivierte Anzeigesegmente 7', 8', die die permanent angetriebenen Räder, hier die Hinterräder stilisieren, optisch hervorgehoben - siehe Fig. 2-, während die nicht aktivierten Antriebs- bzw. Sperrzustände durch dünnstrichig aktivierte Anzeigesegmente, die zudem in einer anderen Farbe, z.B. weiß oder gelb aufscheinen, angezeigtwerden. Durch eine Betätigung des Tastschalters 11' wird die Zuschaltung der Vorderachse, durch eine Betätigung des Tastschalters 12' eine zusätzliche Sperrung des Hinterachsdifferentiales und durch eine Betätigung des Tastschalters 13' eine zusätzliche Sperrung auch des Vorderachsdifferentiales ausgelöst, und zwar über in der Zeichnung nicht dargestellte fahrzeuginterne Steuerungsorgane. Dabei wird im Anzeigedisplay 14 die jeweils ausgelöste Achs-Zuschaltung bzw. Differential-Sperrung durch zusätzlich dickbalkig aktivierte Anzeigesegmente optisch hervorgehoben, d.h., die Betätigung jedes der Tastschalter 11', 12', 13' führt im Anzeigedisplay 14 zu einer Addition der aufdem jeweiligen Tastschalter-Symbol dickbalkig gegebenen Symbolteile in Form entsprechend dickbalkig und zusätzlich farblich unterschiedlich aktivierter Anzeigesegmente zur Grundsymbolik. Dabei erscheinen die Segmente, welche dickbalkig angetriebene Räder symbolisieren, generell in gleicher Farbe, z.B. grün, während hierzu jene Segmente, welche dickbalkig aktivierte Differentialsperren symbolisieren, in stark abgesetzter anderer Farbe, z.B. rot, erscheinen, was dem Fahrer eine eindeutige optisch-visuelle Differenzierung ermöglicht. Dies bedeutet beim dargestellten Beispiel, daß im Fall einer Betätigung des Tastschalters 11' die dadurch hervorgerufene Zuschaltung des Vorderachsantriebes im Anzeigedisplay 14 durch eine zusätzliche dickbalkige und beispielsweise grüne Aktivierung der Balkensegmente 4', 9' und 10' optisch bestätigt wird und dem Fahrer die dann wirksamen Antriebszustände auf dem Anzeigedisplay 14 durch die dickbalkig aktivierten Anzeigesegmente 4', 7', 8', 9' und 10' signalisiert sind - siehe Fig. 2A. Bei einer Betätigung des Tastschalters 12' wird die hierdurch ausgelöste Sperrung des HInterachsdifferentiales im Anzeigedisplay durch das gegenüber dem bisherigen Zustand zusätzlich dickbalkig und beispielsweise rot aktivierte Anzeigesegment 5' bestätigt, so daß dem Fahrer die dann wirksamen Antriebs- und Sperrzustände im Anzeigedisplay 14 durch die dickbalkig aktivierten Anzeigesegmente 4', 5', 7', 8', 9' und 10' signalisiert sind - siehe Fig. 2B. Wird auch noch der Tastschalter 13' betätigt, so wird die hierdurch ausgelöste zusätzliche Sperrung auch des Vorderachsdifferentiales im Anzeigedisplay 14 durch das gegenüber dem bisherigen Zustand zusätzlich dickbalkig und beispielsweise rot aktivierte Anzeigesegmente 6' bestätigt, so daß dem Fahrer die Aktivierung des gesamten Antriebsstranges und aller möglichen Differentialsperren auf dem Anzeigedisplay durch insgesamt dickbalkige Aktivierung aller Balkensegmente 4' bis 10' mit farblicher Unterscheidung zwischen Antriebszuschaltung und Differentialsperrung signalisiert ist - siehe Fig. 2C.

Jeder der solchermaßen ausgelösten Zuschalt- und Sperrzustände ist durch nochmaliges Betätigen des zugehörigen Tastschalters 11' bzw. 12' bzw. 13' wieder aufhebbar. Im Anzeigedisplay 14 wird die jeweilige Aufhebungsmaßnahme durch Rücknahme der dickbalkigen Aktivierung der betreffenden Balkensegmente und Rückkehr derselben in dünnstrichig aktivierten Zustand dem Fahrer optisch bestätigt.

## Patentansprüche

1. Kraftfahrzeug, insbesondere Nutzfahrzeug, mit einem Antriebsstrang mit wenigstens einer permanent angetriebenen Achse, wenigstens einer weiteren, zuschaltbaren Achse und sperrbaren Differentialen, wobei die antriebsmäßige Zuschaltung der weiteren Achse(n) und die Sperrung der Differentiale durch fahrerseitige Betätigung wenigstens eines zugehörigen Betätigungselementes auslösbar und die aktivierten Antriebs- und Sperrzustände optisch anzeigbar sind, dadurch gekennzeichnet, daß dem Betätigungselement (1A) bzw. den Betätigungselementen (11, 12, 13) ein die angetriebenen Räder und die zusätzlich anzutreibenden Räder sowie den Antriebsstrang des Kraftfahrzeuges durch LED- oder LCD-Segmente (4, 5, 6, 7, 8, 9, 10; 4', 5', 6', 7', 8', 9', 10') symbolisch nachbildendes Anzeigedisplay (3; 14) zugeordnet ist, wobei in letzterem die LED- bzw. LCD-Segmente in solcher Anordnung gegeben sind, daß
a) angetriebene Räder und ausgelöste Differentialsperren dickbalkig,
b) nicht angetriebene Räder und nicht ausgelöste Differentialsperren dagegen nur dünnstrichig
angezeigt werden.

2. Kraftfahrzeug nach Anspruch 1, dadurch gekennzeichnet, daß das Anzeigedisplay (3) integraler Bestandteil eines Tastschalters (2) ist, der ein Betätigungselement (1A) bildet, durch dessen jeweilige Betätigung die Zuschaltung der bzw. jeweils einer der weiteren Achse(n) sowie die Sperrung jeweils eines Differentials in einer bestimmten Reihenfolge auslösbar ist (Fig. 1).

3. Kraftfahrzeug nach Anspruch 1, dadurch gekennzeichnet, daß das Anzeigedisplay (14) im Blickfeld des Fahrers angeordnet ist und diesem eigenständigen Anzeigedisplay (14) mehrere Betätigungselemente (11, 12, 13)-je eines für eine Antriebszuschaltfunktion oder eine Differentialsperrfunktion - zugeordnet sind, von denen jedes aus einem Tastschalter (11', 12', 13') mit einem die Räder und den Antriebsstrang des Fahrzeugs stilisierenden Symbol (11'', 12'', 13'') besteht, wobei die auszulösende Zuschalt- bzw. Sperrmaßnahme dickbalkig hervorgehoben, die anderen Symbolteile dagegen nur dünnstrichig dargestellt sind, und daß durch die Betätigung jedes Tastschalter (11', 12', 13') eine Addition der an ihm dickbalkig gegebenen Symbolteile zur Grundsymbolik im Anzeigedisplay (14) in Form entsprechend dickbalkig und zusätzlich farblich unterschiedlich, die Antriebszuschaltung und Differentialsperrung optisch differenziert hervorhebend aktivierter Anzeigesegmente bewirkbar ist (Fig. 2).

4. Kraftfahrzeug nach einem der vorhergehenden Ansprüche, dadurch gekennzeichnet, daß mit dem Anzeigedisplay (3 bzw. 14) bei Nichtaktivierung des Antriebes der zuschaltbaren Achse(n) und der Differentialsperren generell nur die Räder der permanent angetriebenen Achse(n) durch dickbalkig und in einer bestimmten Farbe aktivierte LED- bzw. LCD-Segmente angezeigt sind.

5. Kraftfahrzeug nach einem der vorhergehenden Ansprüche, dadurch gekennzeichnet, daß im Anzeigedisplay (3bzw. 14) über dessen LED- bzw. LCD-Segmente
a) die angetriebenen und antriebsmäßig zugeschalteten Räder des Fahrzeugs alle dickbalkig und in gleicher Farbe, beispielsweise grün,
b) hingegen jede Differentialsperrung zwar auch dickbalkig, aber in einer stark unterschiedlichen Farbe, beispielsweise rot und damit optisch eindeutig differenzierbar hervorgehoben
dargestellt sind.

6. Kraftfahrzeug nach einem der vorhergehenden Ansprüche, dadurch gekennzeichnet, daß im Anzeigedisplay (3 bzw. 14) über dessen LED- bzw. LCD-Segmente der Antriebsstrang des Fahrzeugs durch ein langes, dickbalkig oder dünnstrichig aktivierbares Balkensegment (4 bzw. 4') und jeweils senkrecht hierzu gegebene kürzere, die Achse(n) stilisierende und im Fall deren Sperrbarkeit über ein Differeritial auch dickbalkig oder dünnstrichig aktivierbare Balkensegmente (5 bzw. 5', 6 bzw. 6') sowie sich endseitig der letzten jeweils anschließende kurze, die angetrieben bzw. antreibbaren Räder symbolisierende Balkensegmente (7, 8, 9, 10 bzw. 7', 8', 9', 10') stilisiert ist, wobei die nichtlenkbare Räder stilisierenden Segmente (7, 8 bzw. 7', 8') senkrecht zu dem die zugehörige Achse stilisierende Balkensegment (5, 5') und die lenkbare Räder stilisierenden Segmente (9, 10 bzw. 9', 10') schräg zu dem die zugehörige Achse stilisierenden Balkensegment (6, 6') stehen.

7. Kraftfahrzeug nach Anspruch 2, dadurch gekennzeichnet, daß das Betätigungselement (1) im Blickfeld des Fahrers und in manuell gut erreichbarem Abstand von dessen normaler Sitzposition im Bereich um das Lenkrad, am Armaturenbrett, einer Konsole oder dergleichen angeordnet ist, und daß diesem Betätigungselement benachbart ein Rücknahmeschalter (1B) zugeordnet ist, durch dessen jeweilige Betätigung eine durch Betätigung des Betätigungselementes (1A) ausgelöste Zuschalt- oder Sperrmaßnahme innerhalb der gegebenen Reihenfolge um jeweils einen Schritt zurücknehmbar ist und die Darstellung auf dem Anzeigedisplay (3) des Betätigungselementes (1A) diesen Änderungen durch entsprechende Änderung der Symbolik folgt.

8. Kraftfahrzeug nach Anspruch 3, dadurch gekennzeichnet, daß die Symbole (11'', 12'', 13'') auf dem jeweiligen Tastschalter (11', 12', 13') durch Aufkleber, Farbaufdruck, von innen her durchleuchtete, durchscheinende Striche, oder entsprechend aktivierte LED- oder LCD-Anzeigesegmente gebildet sind.

## Claims

1. A motor vehicle, in particular a utility vehicle, having a drive train with at least one constantly driven axle, at least one further, engageable axle and lockable differentials, wherein the driving engagement of the further axle or axles and the locking of the differentials are releasable by the actuation of at least one associated actuation member by the driver and the activated driving and locking states are indicated optically, **characterized in that** a display (3; 14) simulating the driven wheels and the wheels to be additionally driven as well as the drive train of the motor vehicle symbolically by LED or LCD segments (4, 5, 6, 7, 8, 9, 10; 4', 5', 6', 7', 8', 9', 10') is associated with the actuation member (1A) or the actuation members (11, 12, 13), wherein the LED or LCD segments are presented in the said display (3, 14) in such an arrangement that
a) driven wheels and released differential locks are indicated by bold lines, and
b) non-driven wheels and non-released differential locks are indicated on the other hand by thin lines.

2. A motor vehicle according to Claim 1, **characterized in that** the display (3) is an integral component of a switch (2) forming an actuation member (1A), by the respective actuation of which the switching of the axle or one of the further axles and the locking of one respective differential can be released in a defined sequence (Fig. 1).

3. A motor vehicle according to Claim 1, **characterized in that** the display (14) is situated in the driver's field of vision, and this independent display (14) has associated therewith a plurality of actuation members (11, 12, 13) - one for a respective drive-switching function or a respective differential-locking function - of which each one comprises a switch (11', 12', 13') with a symbol (11'', 12'', 13'') showing the wheels and the drive train of the vehicle stylized, wherein the switching or locking action to be released is emphasized by bold lines, whereas the other symbol parts on the other hand are shown only in thin lines, and by the actuation of each switch (11', 12', 13') an addition of the symbol parts indicated thereon in bold lines can be made to the basic symbols of display segments activated in bold lines to correspond in shape in the display (14) and, in addition, of different colour, and emphasizing the drive switching and differential locking in an optically differentiated manner (Fig. 2).

4. A motor vehicle according to one of the preceding Claims, **characterized in that** in general only the wheels of the constantly driven axle or axles are indicated in the display (3 and 14 respectively) by LED or LCD segments activated in bold lines and in a specific colour when the drive of the switchable axle or axles and the differential locks are not activated.

5. A motor vehicle according to one of the preceding Claims, **characterized in that**
a) the driven wheels of the vehicle and the wheels thereof engaged for driving are all shown in bold lines and in the same colour, for example green, whereas
b) each differential locking is also shown in bold lines, but in a strongly contrasting colour, for example red, and therefore emphasized visually in a clearly differentiable manner
in the display (3 and 14 respectively) by way of the LED or LCD segments thereof

6. A motor vehicle according to one of the preceding Claims, **characterized in that** the drive train of the vehicle is shown stylized in the display (3 and 14 respectively) by way of the LED or LCD segments thereof by a long line segment (4 and 4' respectively) activatable in bold lines or thin lines and by respective shorter line segments (5 and 5' respectively, 6 and 6' respectively) - arranged at right angles thereto, showing the axle or axles stylized and also activatable in bold lines or thin lines in the case where the said axle or axles are lockable by way of a differential - as well as by short line segments (7, 8, 9, 10 and 7', 8', 9', 10' respectively) each attached to the ends of the shorter line segments (5 and 5' respectively, 6 and 6' respectively) and symbolizing the driven or drivable wheels, wherein the segments (7, 8 and 7', 8' respectively) showing non-steerable wheels stylized are at right angles to the line segment (5 and 5' respectively) showing the associated axle stylized and the segments (9, 10 and 9', 10' respectively) showing steerable wheels stylized are arranged obliquely to the line segment (6, 6') showing the associated axle stylized.

7. A motor vehicle according to Claim 2, **characterized in that** the actuation member (1) is situated in the driver's field of vision and in the region of the steering wheel, on the dashboard, on a console or the like at a distance easy to reach manually from the driver's normal sitting position, and the said actuation member has associated therewith, adjacent thereto, a return switch (1B) by the respective actuation of which a switching or locking action released by actuating the actuation member (1A) can be set back by one respective step within the given sequence, and the image on the display (3) of the actuation member (1A) follows these changes by changing the symbols accordingly.

8. A motor vehicle according to Claim 3, **characterized in that** the symbols (11'', 12'', 13'') are shown on the respective switch (11', 12', 13') by stickers, colour printing, translucent lines illuminated from the inside, or LED or LCD display segments activated accordingly.

## Revendications

1. Véhicule automobile, en particulier véhicule utilitaire, dont la ligne de transmission entraîne au moins un essieu en permanence, équipé au moins d'un autre essieu enclenchable et de différentiels à blocage, la mise en service de l'autre (ou des autres) essieu(x) ainsi que le blocage des différentiels étant commandés par le conducteur par action d'un élément de manoeuvre correspondant, avec indication optique des essieux entraînés et des différentiels bloqués, caractérisé en ce qu'à l'élément de manoeuvre (1A) ou aux éléments de manoeuvre (11, 12, 13) est associé un écran d'affichage (3, 14) sur lequel sont figurées symboliquement les roues entraînées, celles qui peuvent l'être ainsi que la ligne de transmission du véhicule, au moyen de segments indicateurs (4, 5, 6, 7, 8, 9, 10 ; 4', 5', 6', 7', 8', 9', 10') équipés de LED ou de LCD, la disposition de ces segments étant telle que :
a) les roues entraînées et les différentiels bloqués sont figurés en traits épais,
b) les roues non entraînées et les différentiels non bloqués sont figurés par contre en traits minces seulement.

2. Véhicule selon la revendication 1, caractérisé en ce que l'écran d'affichage (3), est partie intégrante d'un contacteur à touche (2) jouant le rôle d'élément de manoeuvre (1A) et qui, lorsqu'on l'actionne, entraîne, dans un ordre donné, l'enclenchement de chacun des autres essieux et le blocage de chacun des différentiels.

3. Véhicule selon la revendication 1, caractérisé en ce que l'écran d'affichage (14) est placé dans le champ de vision du conducteur et que lui sont associés différents éléments de manoeuvre (11, 12, 13) correspondant chacun à une fonction d'enclenchement d'un entraînement ou de blocage d'un différentiel, chacun de ces éléments étant constitué d'un contacteur à touche (11', 12', 13') sur lequel apparaissent, sous forme de symboles stylisés (11'', 12'', 13''), les roues et la ligne de transmission du véhicule, l'opération à effectuer de mise en entraînement ou de blocage ressortant sous la forme de trait épais, tandis que les autres parties du symbole restent représentés en trait mince, l'actionnement de chaque contacteur à touche (11', 12', 13') entraînant l'addition à la symbolique de base figurant sur l'écran (14) des éléments du symbole indiqués en trait épais sur le contacteur, qui apparaissent alors sur l'écran avec l'épaisseur de trait correspondante et en plus une coloration différente, sous la forme de segments indicateurs activés faisant ressortir par différence optique l'enclenchement de l'entraînement et le blocage du différentiel (figure 2).

4. Véhicule automobile selon une des revendications précédentes, caractérisé en ce que sur l'écran d'affichage (3 ou 4) lorsque l'entraînement de l'essieu (ou des essieux) enclenchable(s) ainsi que les blocages des différentiels ne sont pas activés, d'une manière générale seules les roues de l'essieu (ou des essieux) entraîné(s) en permanence sont figurés en traits épais et dans une couleur déterminée, par des segments de LED ou LCD activés.

5. Véhicule automobile selon une des revendications précédentes, caractérisé en ce que sur l'écran d'affichage (3 ou 4), par l'intermédiaire de ses segments indicateurs à LED ou LCD :
a) les roues entraînées, en permanence ou par enclenchement, sont toutes figurées en trait épais d'une même couleur, par exemple verte,
b) à l'opposé, chaque blocage de différentiel est figuré également en trait épais, mais dans une couleur fort différente, par exemple rouge, de manière à se distinguer visuellement très nettement.

6. Véhicule automobile selon une des revendications précédentes, caractérisé en ce que sur l'écran d'affichage (3 ou 4) les LED ou LCD représentent de manière stylisée la ligne de transmission sous la forme d'un long segment activable, épais ou mince (4 ou 4'), prolongé perpendiculairement par des segments plus courts (5 et 5', 6 et 6') qui représentent de manière stylisée les essieux et qui, dans le cas où les essieux peuvent être bloqués au niveau du différentiel, sont activables en trait épais ou en trait mince, ces segments étant raccordés à chacune de leurs extrémités à un segment court (7, 8, 9, 10 ou 7', 8', 9', 10') symbolisant les roues entraînées ou pouvant l'être, les segments (7, 8 et 7', 8') figurant les roues non directrices étant perpendiculaires au segment (5, 5') stylisant l'essieu correspondant, tandis que les roues directrices sont stylisées par des segments (9, 10 ou 9', 10') disposées en oblique par rapport au segment correspondant (6, 6') figurant l'essieu correspondant.

7. Véhicule automobile selon la revendication 2, caractérisé en ce que l'élément de manoeuvre (1) se trouve dans le champ de vision du conducteur et à portée de la main de celui-ci lorsqu'il est normalement assis, à savoir près du volant, sur le tableau de bord, sur une console ou organe analogue, tandis qu'à cet élément et près de lui est associé un contacteur de retour en arrière (1B) dont chaque manoeuvre a pour effet d'annuler une opération d'enclenchement d'entraînement ou de blocage de différentiel produite par l'élément de manoeuvre (1) en remontant pas à pas la suite de ces opérations, ces modifications se traduisant sur l'écran d'affichage (3) de l'élément de manoeuvre (1A) par des modifications correspondantes des symboles.

8. Véhicule automobile selon la revendication 3, caractérisé en ce que les symboles (11'', 12'', 13'') portés par les divers contacteurs à touche (11', 12', 13') peuvent être obtenus par collage, par impression colorée de traits transparents éclairés de l'intérieur ou par des segments d'affichage à LED ou LCD, activés en conséquence.
